(19) Europäisches Patentamt
European Patent Office
Office européen des brevets

(11) EP 2 054 546 B1

(12) # EUROPÄISCHE PATENTSCHRIFT

(45) Veröffentlichungstag und Bekanntmachung des Hinweises auf die Patenterteilung:
**22.06.2011 Patentblatt 2011/25**

(21) Anmeldenummer: **07788255.3**

(22) Anmeldetag: **06.08.2007**

(51) Int Cl.:
***D06M 15/643*** (2006.01) ***C08G 77/38*** (2006.01)
***C08L 83/06*** (2006.01)

(86) Internationale Anmeldenummer:
**PCT/EP2007/058143**

(87) Internationale Veröffentlichungsnummer:
**WO 2008/022907 (28.02.2008 Gazette 2008/09)**

(54) **ß-KETOCARBONYL-FUNKTIONELLE SILOXANPOLYMERE ENTHALTENDE ZUSAMMENSETZUNGEN**

-KETOCARBONYL-FUNCTIONAL SILOXANE POLYMER-CONTAINING COMPOSITIONS

COMPOSITIONS CONTENANT DES POLYMÈRES DE SILOXANE À FONCTION ß-CÉTOCARBONYLE

(84) Benannte Vertragsstaaten:
**BE DE FR GB NL**

(30) Priorität: **25.08.2006 DE 102006039940**

(43) Veröffentlichungstag der Anmeldung:
**06.05.2009 Patentblatt 2009/19**

(73) Patentinhaber: **Wacker Chemie AG**
**81737 München (DE)**

(72) Erfinder:
- **HERZIG, Christian**
**83329 Waging am See (DE)**
- **DORMEIER, Siegfried**
**94166 Stubenberg (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**US-A- 5 952 443 US-A- 6 121 404**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Gegenstand der Erfindung sind β-Ketocarbonyl-funktionelle Siloxanpolymere enthaltende Zusammensetzungen und Verfahren zu deren Herstellung.

In US 6,121,404 A wird beschrieben, dass sich ein Polyether-Siloxan-Copolymer mit einem kurzkettigen Siloxanblock, das β-Ketocarbonylfunktionen enthält und wasserlöslich ist, mit Aminosiloxanen zu einem Elastomerfilm vernetzen lässt. Das β-Ketocarbonyl-funktionelle Siloxanpolymer wird zunächst in Wasser gelöst, dazu wird dann das Aminosiloxan gegeben und die wässrige Lösung wird eingetrocknet. Es bleibt ein Elastomerfilm zurück.

Die β-Ketocarbonyl-funktionelle Siloxane können gemäß US 6,121,404 zur Textilbehandlung eingesetzt werden. Bei der Behandlung von Textilien ist es aber von Bedeutung, dass die so ausgerüsteten Textilien möglichst wenig vergilben.

EP 603 716 A1 beschreibt Polyether- und Polyesteracetoacetate mit 2 oder mehr Funktionen, die sich mit Polyaminen vernetzen lassen. Die Polyamine werden generell überschüssig eingesetzt.

Eine flüssige Beschichtungsmasse kann entsprechend EP 481 345 A2 hergestellt werden, indem ein polymeres Acetoacetat, hergestellt aus einem Polyepoxid mit Wasser, Amin oder Hydroxycarbonsäure mit anschließender Veresterung mit Acetessigsäure, und ein Polyketimin oder Polyaldimin gemischt werden.

Eine ähnliche Technik beschreibt EP 199 087 A1. Das Polyacetoacetat wird hier durch Polymerisation eines ungesättigten Acetessigesters erhalten.

Aus US 3,668,183 A ist die Herstellung von Polyenaminharzen bekannt, die durch Reaktion von Polyacetoacetaten/-acetamiden und geblockten Polyaminen erfolgt. Nach kurzer Topfzeit gelieren diese Harze zu festen Massen.

In J. prakt. Chem. 336, 483 - 491 (1994) werden durch Umsetzung von Polyetheracetoacetaten mit Diaminen, aminofunktionelle Polyetherenamine erhalten die mit Diisocyanaten kettenverlängert werden.

Zur Funktionalisierung von Polymeren, die primäre oder sekundäre Aminogruppen enthalten, wird in EP 442 653 A2 eine Methode beschrieben, die die Umsetzung dieser Polymere mit einer Verbindung beinhaltet, die genau eine enolische Carbonylgruppe und mindestens eine der zu pfropfenden Funktionen enthält.

In US 5,952,443 A ist eine härtbare Beschichtungszusammensetzung beschrieben, die β-Ketocarbonyl-funtionelle Polysiloxane, Polyamine insbesondere blocked Polyamine und vorzugsweise ein Polyacrylat-Vernetzungsmittel enthält. Die Beschichtungszusammensetzungen werden als Primer auf Metalloberflächen, wie Aluminium oder Stahl, im Automobilbereich eingesetzt und es werden ausgehärtete Produkte erhalten.

Es bestand die Aufgabe β-Ketocarbonyl-funktionelle Siloxanpolymere aufweisende Zusammensetzungen bzw. daraus erhaltene Reaktionsprodukte bereitzustellen, die zur Textilbehandlung geeignet sind, wobei die so ausgerüsteten Textilien oder textilen Gewebe eine möglichst geringe Vergilbung aufweisen sollen. Weiterhin bestand die Aufgabe Zusammensetzungen bzw. Reaktionsprodukte bereitzustellen, deren Mischungen mit Wasser stabiler sind als die Mischungen der eingesetzten β-Ketocarbonyl-funktionellen Siloxanpolymere mit Wasser.

Die Aufgabe wird durch die Erfindung gelöst.

Gegenstand der Erfindung sind Zusammensetzungen enthaltend wasserlösliche Reaktionsprodukte aus

(1) β-Ketocarbonyl-funktionellen Siloxanpolymeren, die mindestens einen dreiwertigen Rest B der allgemeinen Formel

$$-C(=O)-\overset{|}{C}R^3-C(=O)- \qquad (I)$$

enthalten, wobei
$R^3$ ein Wasserstoffatom oder ein einwertiger Kohlenwasserstoffrest mit 1 bis 30 Kohlenstoffatomen, vorzugsweise ein Wasserstoffatom bedeutet,
(2) organische Si-freie Polyamine, die mindestens drei Aminogruppen enthalten, von denen mindestens zwei primäre Aminogruppen sind,
und gegebenenfalls
(3) Silicium-freie Verbindungen, die mindestens einen Reste B der Formel (I) oder mindestens eine primäre Aminogruppe enthalten.

Gegenstand der Erfindung ist weiterhin ein Verfahren zur Herstellung der Zusammensetzungen durch Herstellung einer Mischung enthaltend

(1) β-Ketocarbonyl-funktionellen Siloxanpolymeren, die mindestens einen dreiwertigen Rest B der allgemeinen Formel

$$-C(=O)-\overset{|}{C}R^3-C(=O)- \qquad (I)$$

enthalten, wobei
$R^3$ ein Wasserstoffatom oder ein einwertiger Kohlenwasserstoffrest mit 1 bis 30 Kohlenstoffatomen, vorzugsweise ein Wasserstoffatom bedeutet,
(2) organische Si-freie Polyamine, die mindestens drei Aminogruppen enthalten, von denen mindestens zwei primäre Aminogruppen sind,
und gegebenenfalls
(3) Si-freie Verbindungen, die mindestens einen Reste B der Formel (I) oder mindestens eine primäre Aminogruppe enthalten,

mit der Maßgabe, dass nach dem Reagierenlassen der Komponenten (1), (2) und ggf. (3) wasserlösliche Reaktionsprodukte erhalten werden.

Beim Rest B in Formel (I) ist vorzugsweise höchstens eine der drei freien Valenzen an Heteroatome gebunden.

Vorzugsweise enthalten die Siloxanpolymere (1) mindestens 2 Reste B pro durchschnittlichem Molekül, bevorzugt 2 bis 20 Reste B. Die organischen Reste B sind an den Siloxanteil der Siloxanpolymere (1) bevorzugt über Si-C-Gruppen gebunden.

Für den Fall, dass der dreiwertige Rest B mit keiner der freien Valenzen an Heteroatome gebunden ist, enthalten die erfindungsgemäßen Siloxanpolymere (1) bevorzugt mindestens einen SiC-gebundenen Rest $B^1$ ausgewählt aus der Gruppe der allgemeinen Formeln

$$-R^1-C(=O)-CR^3R^4-C(=O)-R^5 \qquad (II)$$

und

$$R^6-C(=O)-\overset{\overset{|}{R^1}}{\overset{|}{C}}R^3-C(=O)-R^7 \qquad (III)$$

wobei $R^3$ die oben dafür angegebene Bedeutung hat,
$R^1$ ein zweiwertiger organischer Rest mit 1 bis 200 Kohlenstoffatomen, der außer in den Endpositionen Heteroatome ausgewählt aus der Gruppe von Sauerstoff, Schwefel und Stickstoff enthalten kann, vorzugsweise einen Kohlenwasserstoffrest mit 1 bis 20 Kohlenstoffatomen, bedeutet,
$R^4$ ein Wasserstoffatom oder einen Kohlenwasserstoffrest mit 1 bis 30 Kohlenstoffatomen, vorzugsweise ein Wasserstoffatom ist, und
$R^5$, $R^6$ und $R^7$ jeweils ein Kohlenwasserstoffrest mit 1 bis 30 Kohlenstoffatomen bedeutet.

Die Reste $B^1$ der Formeln (II) bzw. (III) haben die Struktur eines substituierten Acetylacetons, welches über $R^1$ an ein Siloxanpolymer gebunden ist.

Für den Fall, dass der dreiwertige Rest B mit einer freien Valenzen an Heteroatome gebunden ist, enthalten die erfindungsgemäßen Siloxanpolymere (1) bevorzugt mindestens einen SiC-gebundenen Rest $B^2$ ausgewählt aus der Gruppe der allgemeinen Formeln

$$-R^8-Y-C(=O)-CHR^3-C(=O)-CH_2R^3 \qquad (IV)$$

und

$$-R^a-Y-C(=O)-CR_3=C(-OH)-CH_2R_3 \qquad (V)$$

wobei

Y ein Sauerstoffatom oder ein Rest der Formel $-(NR^9-R')_z-NR^2$, vorzugsweise ein Sauerstoffatom, bedeutet wobei R' ein zweiwertiger Kohlenwasserstoffrest mit 1 bis 6 Kohlenstoffatomen, vorzugsweise ein zweiwertiger Kohlenwasserstoffrest mit 1 bis 4 Kohlenstoffatomen, bedeutet,
$R^2$ ein Wasserstoffatom oder einen Kohlenwasserstoffrest mit 1 bis 18 Kohlenstoffatomen, vorzugsweise ein Wasserstoffatom bedeutet,
$R^3$ die oben dafür angegebene Bedeutung hat,
$R^8$ ein zweiwertiger organischer Rest mit 1 bis 200 Kohlenstoffatomen, der Heteroatome ausgewählt aus der Gruppe von Sauerstoff, Schwefel und Stickstoff enthalten kann, vorzugsweise ein zweiwertiger Kohlenwasserstoffrest mit 1 bis 120 Kohlenstoffatomen, der ein oder mehrere voneinander separate Sauerstoffatome enthalten kann, bedeutet,
$R^9$ $R^2$ oder einen Rest der Formel $-C(=O)-CHR^3-C(=O)-CH_2R^3$ oder $-C(=O)-CR^3=C(-OH)-CH_2R^3$ bedeutet,
z 0 oder eine ganze Zahl von 1 bis 10, vorzugsweise 0, 1 oder 2 ist.

Die Reste $B^2$ der Formeln (IV) und (V) sind über die Reste $R^8$ an das Siloxanpolymer gebunden.

Die Reste $B^2$ sind als Reste B bevorzugt.

Die Reste $B^2$ der Formeln (IV) und (V) sind tautomere Gruppen. Bevorzugt enthalten die erfindungsgemäßen Siloxanpolymere mindestens 2 Reste $B^2$ aus der Gruppe der Formeln (IV) und (V) pro Molekül, wobei sie nur Reste der Formel (IV), nur Reste der Formel (V) oder beide zusammen enthalten können. Da tautomere Gruppen ineinander umwandelbar sind, kann sich ihr jeweiliger Gehalt in Abhängigkeit von äußeren Bedingungen verändern. Deren Quotient kann daher in weiten Bereichen schwanken und Quotienten von ca. 1000:1 bis ca. 1:1000 betragen.

Der Enolgehalt der erfindungsgemäßen Siloxanpolymere (1) führt zu einem schwach sauren Charakter dieser Stoffe, der maßgeblich von den Strukturparametern und Substituenten der Gruppe der allg. Formel (I) abhängt. Bevorzugt hat diese enolisierbare Gruppe einen pks-Wert von größer 5,0, besonders bevorzugt von 6,0 bis 15,0, speziell von 7,0 bis 14,0.

Für den Fall, dass der dreiwertige Rest B mit zwei freien Valenzen an Heteroatome gebunden ist, enthalten die erfindungsgemäßen Siloxanpolymere (1) bevorzugt mindestens einen SiC-gebundenen Rest $B^3$ ausgewählt aus der Gruppe der allgemeinen Formeln

$$-R^{11}-Y-C(=O)-CR^3R^4-C(=O)-Y-R^{12} \qquad (VI)$$

und

$$R^{13}-Y-C(=O)-C(-R^{11}-)R^3-C(=O)-Y-R^{14} \qquad (VII)$$

wobei $R^3$ und $R^4$ die oben dafür angegebene Bedeutung haben,
$R^{11}$ ein zweiwertiger organischer Rest, vorzugsweise ein zweiwertiger organischer Rest mit 1 bis 200 Kohlenstoffatomen, der Heteroatome ausgewählt aus der Gruppe von Sauerstoff, Schwefel und Stickstoff enthalten kann, bevorzugt einen Kohlenwasserstoffrest mit 1 bis 120 Kohlenstoffatomen, bedeutet,
$R^{12}$, $R^{13}$ und $R^{14}$ die Bedeutung von $R^5$, $R^6$ und $R^7$ haben.

Die erfindungsgemäßen Siloxanpolymere (1) enthalten vorzugsweise 5 bis 5000 Si-Atome, bevorzugt 50 bis 1000 Si-Atome pro Molekül. Sie können linear, verzweigt, dendrimer oder cyclisch sein. Mit in den Bereich der erfindungsgemäßen Siloxanpolymere (1) fallen auch Netzwerkstrukturen beliebiger Größe, denen weder eine konkrete noch durchschnittliche Anzahl von Si-Atomen zuordenbar ist, sofern sie mindestens 2 funktionelle Gruppen B der Formel (I) enthalten.

Die erfindungsgemäßen β-Ketocarbonyl-funktionellen Siloxanpolymere (1) sind vorzugsweise Organopolysiloxane aus Einheiten der allgemeinen Formel

$$X_aR_c(OR^{15})_dSiO_{\frac{4-(a+c+d)}{2}} \qquad (VIII),$$

wobei

X einen organischen Rest bedeutet, der den Rest B enthält, vorzugsweise ein SiC-gebundener Rest $B^1$, $B^2$ oder $B^3$

ist, wobei B, $B^1$, $B^2$ und $B^3$ die oben dafür angegebene Bedeutung haben,

R einen einwertigen, gegebenenfalls substituierten Kohlenwasserstoffrest mit 1 bis 18 Kohlenstoffatomen je Rest bedeutet, $R^{15}$ ein Wasserstoffatom oder einen Alkylrest mit 1 bis 8 Kohlenstoffatomen, bevorzugt ein Wasserstoffatom oder einen Methyl- oder Ethylrest bedeutet,

a 0 oder 1,

c 0, 1, 2 oder 3 und

d 0 oder 1 ist,

mit der Maßgabe, dass die Summe a+c+d≤3 ist und durchschnittlich mindestens ein Rest X je Molekül enthalten ist.

Bevorzugte Beispiele für die erfindungsgemäßen β-Ketocarbonyl-funktionellen Siloxanpolymere (1) sind Organopolysiloxane der allgemeinen Formel

$$X_gR_{3-g}SiO\ (SiR_2O)_1(SiRXO)_kSiR_{3-g}X_g \qquad (IXa)$$

und

$$(R^{15}O)R_2SiO(SiR_2O)_n(SiRXO)_mSiR_2(OR^{15}) \qquad (IXb)$$

wobei X, R und $R^{15}$ die oben dafür angegebene Bedeutung haben, g 0 oder 1,
k 0 oder eine ganze Zahl von 1 bis 30 ist und
l 0 oder eine ganze Zahl von 1 bis 1000 ist,
m eine ganze Zahl von 1 bis 30 ist und
n 0 oder eine ganze Zahl von 1 bis 1000 ist,
mit der Maßgabe, dass durchschnittlich mindestens ein Rest X je Molekül enthalten ist.

Beispiele für Reste R sind sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Reste $R^1$ sind
$-CH_2CH_2-$, $-CH(CH_3)-$, $-CH_2CH_2CH_2-$, $-CH_2C(CH_3)H-$, $-CH_2CH_2CH_2CH_2-$,
$-CH_2CH_2CH\ (CH_3)-$ und $-CH_2CH_2C(CH_3)_2CH_2-$,
wobei der $-CH_2CH_2CH_2-$Rest bevorzugt ist.

Bevorzugt ist Rest R' ein Rest der Formel $-CH_2CH_2-$ und $-CH_2CH_2CH_2-$.

Beispiele für Reste $R^3$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Kohlenwasserstoffreste $R^3$ gelten auch für Kohlenwasserstoffreste $R^2$.

Beispiele für Kohlenwasserstoffreste $R^3$ gelten auch für Kohlenwasserstoffreste $R^4$, $R^5$, $R^6$, $R^7$, $R^{12}$, $R^{13}$ und $R^{14}$.

Beispiele für Reste $R^{11}$ sind die für Reste $R^1$ genannten Beispiele, sowie Polyetherreste von Polyethylenoxid, Polypropylenoxid, Poly-THF, sowie deren Mischpolymere bis zu einer C-Atomzahl von 200.

Beispiele für Kohlenwasserstoffreste $R^{15}$ sind Alkylreste, wie der Methyl-, Ethyl-, n-Propyl-, iso-Propyl-, 1-n-Butyl-; 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest.

Die Reste $B^1$ der Formeln (II) bzw. (III) sind β-Diketongruppen, die entweder endständig, bezogen auf das Diketon (Formel (II)) oder am C-Atom zwischen den beiden Carbonylgruppen (Formel (III)) über $R^1$ an ein Siloxanpolymer gebunden sind.

Verfahren zur Herstellung von β-Ketocarbonyl-funktionellen Siloxanpolymeren (1) mit Resten $B^1$ der Formel (II) sind aus der organischen Chemie bekannt. Bevorzugt werden sie über die Acylierung von Acetoacetaten mit Organosiliciumverbindungen, die Si-gebundene Säurechloride enthalten, erhalten. Wenn beispielsweise Siloxanpolymere, die Si-gebundenes Undecansäurechlorid ($R^1$ = $-C_{10}H_{20}-$) enthalten, mit Ethylacetoacetat ($CH_3-C(=O)-CH_2-C(=O)-O-CH_2CH_3$) umgesetzt werden (Acylierung) und danach thermisch $CO_2$ und Ethanol abgespalten werden, werden Siloxanpolymere erhalten, die Reste $B^1$ der Formel (II) enthalten mit $R^1$ = $-C_{10}H_{20}-$, $R^3$ = H, $R^4$ = H und $R^5$ = $-CH_3$.

Verfahren zur Herstellung von β-Ketocarbonyl-funktionellen Siloxanpolymeren (1), die Reste $B^1$ der Formel (III) enthalten, sind in DE 1193504 A und DE 1795563 A beschrieben. Bevorzugt ist hierbei die Hydrosilylierung von Allylacetylaceton, wobei Siloxanpolymere, die Reste $B^1$ der Formel (III) enthalten, entstehen mit $R^1$ = $-C_3H_6-$, $R^3$ =H, $R^6$ = $R^7$ = $-CH_3$. Ein bevorzugtes Verfahren ist weiterhin die Alkylierung von Acetylaceton durch Siloxanpolymere mit Si-gebundenen Halogengruppen, wie $-CH_2Cl$, $-CH_2Br$, $-C_3H_6Cl$ oder $-C_3H_6J$.

Verfahren zur Herstellung von Siloxanpolymeren (1), die Reste $B^2$ der Formeln (IV) und (V) enthalten, sind in US 6,121,404 A beschrieben.

Wenn Y in den Formeln (IV) und (V) ein Sauerstoffatom ist, was bevorzugt ist, können die Reste $R^8$ ein oder mehrere voneinander separate Sauerstoffatome enthalten. Beispiele für Reste $R^8$, die Sauerstoffatome enthalten, sind Polyetherreste, wie

$$-R^{10}-(OC_2H_4)_e-(OC_3H_6)_f-(OC_4H_8)_h-OC_iH_{2i}-(Y) \qquad (X)$$

wobei $R^{10}$ einen Alkylenrest mit 2 bis 20 Kohlenstoffatomen, wie $-CH_2CH_2CH_2-$, $-CH_2CH_2-$, $-CH_2CH_2CH_2CH_2-$, $-CH_2CH_2C(CH_3)_2-$, oder $-CH_2CH_2CH_2CH_2CH_2CH_2-$
bedeutet,
-(Y) die Bindung zu Y in den Formeln (IV) und (V) ist, wobei Y ein Sauerstoffatom ist,
e, f und h jeweils 0 oder eine ganze Zahl von 1 bis 100 bedeuten, mit der Maßgabe, dass die Summe $e+f+h \geq 1$ ist, und i 2, 3 oder 4 ist.

Vorzugsweise werden solche Siloxanpolymere (1) hergestellt aus Siliconpolyethern, die in einer Hydrosilylierungsreaktion durch Umsetzung von α,ω-Dihydroorganopolysiloxanen mit Allylpolyethern erhalten werden. Diese Siliconpolyethern werden mit Diketenen oder Diketen-Addukten umgesetzt.

Wenn Y in den Formeln (IV) und (V) ein Stickstoff-haltiger Rest der Formel $-(NR^9-R')_z-NR^2-$ ist, werden die Siloxanpolymere (1) vorzugsweise hergestellt, indem Diketene (i) der allgemeinen Formel

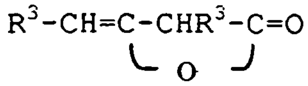 ,

wobei $R^3$ die oben dafür angegebene Bedeutung hat, bevorzugt ein Wasserstoffatom ist,
mit Organosiliciumverbindungen (ii), die mindestens einen Si-gebundenen Rest A der allgemeinen Formel

$$-R^8-(NR^9-R')_z-NR^2_2 \qquad (XI)$$

je Molekül enthalten, wobei $R^8$, R', $R^2$, $R^9$ und z die oben dafür angegebene Bedeutung haben, umgesetzt werden, mit der Maßgabe, dass der Rest A der Formel (XI) mindestens eine primäre und gegebenenfalls mindestens eine sekundäre Aminogruppe, vorzugsweise mindestens eine primäre Aminogruppe, aufweist.

Bevorzugt erfolgt die Umsetzung in Gegenwart von organischen Verbindungen (iii), die die Reaktion von primären oder sekundären Aminogruppen mit β-Ketocarbonylverbindungen verzögern oder verhindern, umgesetzt.

Als organische Verbindungen (iii) werden vorzugsweise solche eingesetzt, die mit Aminen mehr oder weniger feste Addukte ergeben. Beispiele für Verbindungen (iii) sind Aldehyde und Ketone. Bevorzugte Beispiele sind Aceton, Butanon, Methylisobutylketon und Cyclohexanon.

In einem bevorzugten Herstellungsverfahren werden in einer 1. Stufe Organosiliciumverbindungen (ii) mit organischen Verbindungen (iii) umgesetzt, wobei die Verbindungen (iii) Schutzgruppen an den Aminogruppen im Rest A der Formel (XI) bilden, und anschließend in einer 2. Stufe werden die in der 1. Stufe erhaltenen Organosiliciumverbindungen (ii) mit den geschützten Aminogruppen (Umsetzungsprodukte aus (ii) und (iii)) mit Diketenen (i) umgesetzt. Bei der Umsetzung mit Diketen spaltet sich die Schutzgruppe wieder von der Aminogruppe im Rest A der Formel (XI) ab.

Der Rest A der Formel (XI) kann auch ein α-Aminorest der Formel $-CH_2-NR^2-H$ sein. In diesem Fall ist bei der Herstellung die Mitverwendung von organischen Verbindungen (iii) nicht bevorzugt.

Beispiele für Reste A sind

$-CH_2-NH_2$

$-CH(CH_3)-NH_2$

$-C(CH_3)_2-NH_2$

$-CH_2CH_2-NH_2$

$-CH_2CH_2CH_2-NH_2$

$-CH_2CH_2CH_2CH_2-NH_2$

$-CH_2CH_2CH(CH_3)-NH_2$

$-CH_2CH_2CH_2-NH-CH_2CH_2-NH_2$

$-CH_{2C}H_{2C}H_2-N(CH_3)-CH_2CH_2-NH_2$

$-CH_2CH_2CH_2[-NH-CH_2CH_2]_2-NH_2$

$-CH_2CH_2C(CH_3)_2CH_2-NH_2$,

wobei $-CH_2CH_2CH_2-NH_2$ und $-CH_2CH_2CH_2-NH-CH_2CH_2-NH_2$ bevorzugt sind.

Beispiele für Reste $B^2$, wenn Y in den Formeln (IV) und (V) ein Stickstoff-haltiger Rest ist, sind daher

$-CH_2CH_2CH_2-NH(-Z)$,

$-CH_2CH_2CHrNH_{1-x}(-Z)_x-CH_2CH_2-NH (-Z)$,

wobei Z Reste der Formeln

$-C(=O)-CHR^3-C(=O)-CH_2R^3$

oder

$-C(=O)-CR^3=C(-OH)-CH_2R^3$

sind,
$R^3$ die oben dafür angegebene Bedeutung, bevorzugt ein Wasserstoffatom ist und
x 0 oder 1 ist.

Siloxanpolymeren (1), die Reste $B^3$ der Formeln (VI) und (VII) enthalten, werden beispielsweise hergestellt durch Umesterung von Malonestern mit carbinolfunktionellen Siloxanen oder Amidierung mit Aminosiloxanen bzw. durch C-Alkylierung von Malonestern mit Halogenalkylsiloxanen.

Beispiele für organische Si-freie Polyamine (2), die zur Herstellung der erfindungsgemäßen Zusammensetzungen eingesetzt werden, sind Polymerisate von Ethylenimin, hydrolysierte oder teilhydrolysierte Polymerisate von Vinylformamid, Homologe von Ethylendiamin hergestellt aus Ammoniak und Dihalogenethan und reduzierte Polynitrile, wobei Polymerisate von Ethylenimin und hydrolysierte Polymerisate von Vinylformamid bevorzugt sind.

Die Polyamine (2) enthalten vorzugsweise 3 bis ca. 10 000 Aminogruppen, von denen bevorzugt 2 bis 6000 primäre Aminogruppen sind, vorzugsweise 20 bis ca. 6000, besonders bevorzugt 100 bis 6000. Polyamine (2) können lineare, verzweigte oder cyclische Struktur haben, wobei die primären Aminofunktionen in end- oder seitenständiger Position angeordnet sein können. Die Polyamine (2) können neben primären Aminogruppen auch sekundäre und/oder tertiäre Aminogruppen enthalten. Bevorzugt sind aber Polyamine (2), bei denen das Verhältnis von primären zu sekundären Aminogruppen vorzugsweise mindestens 2, bevorzugt mindestens 5 und besonders bevorzugt mindestens 20 beträgt.

Die Polyamine (2) enthalten Amingruppenkonzentrationen im Bereich von vorzugsweise 10 bis 26 mεqu./g, bevorzugt 13 bis 26 mεqu./g (mεqu./g = mÄquivalent pro g Substanz = Äquivalent pro kg Substanz).

Polyamine (2) werden in Mengen von vorzugsweise 0,1 bis 50 Mol, bevorzugt 0,5 bis 20 Mol, primäre Amingruppe je Mol Rest B in den Siloxanpolymeren (1) und gegebenenfalls Verbindungen (3) eingesetzt.

Die gegebenenfalls an der Umsetzung mit beteiligten bevorzugt Si-freien Verbindungen (3) enthalten mindestens eine primäre Aminogruppe oder mindestens einen Rest B, bevorzugt mindestens einen Rest B. Da diese Stoffe vom Wesen her die Funktion eines reaktiven Additivs haben und weniger zum Aufbau von Copolymerstrukturen beitragen sollen, ist ihre Funktionalität eher gering: bevorzugt enthalten die Verbindungen (3) 1 bis 3 Reste B, vorzugsweise genau einen Rest B.

Bevorzugt sind Verbindungen (3) von polarer (hydrophiler) Struktur, zum Beispiel Polyetheracetoacetate (Ethylenoxid- und/oder Propylenoxid-polymere, Poly-THF), Polyesteracetoacetate oder Polyetherpolyesteracetoacetate. Besonders bevorzugt werden Polyether-mono-acetoacetate eingesetzt, die einen Rest $B^2$ der Formel (IV) oder (V) mit Y = Sauerstoff enthalten, wie sie z. B. als Überschusskomponente bei der Herstellung von Siliconpolyethern mit nachfolgender Umsetzung mit Diketen anfallen, und dann bereits im Siloxanpolymer (1) enthalten sind.

Die Herstellung der erfindungsgemäßen Mischung erfolgt durch Mischen von (1) mit (2) und gegebenenfalls (3).

Die Mischung wird vorzugsweise bei einer Temperatur von 10 bis 100°C, bevorzugt 20 bis 70 °C, reagieren gelassen. Die Herstellung der Mischung und das Reagierenlassen erfolgt vorzugsweise beim Druck der umgebenden Atmosphäre, also bei etwa 1020 hPa, kann aber auch bei höheren oder niedrigeren Drücken erfolgen.

Das Mischen und Reagierenlassen erfolgt durch Verrühren mit üblichen Techniken, wie mit Mischern mit niedriger oder hoher Scherung, Rotor-Stator-Rührvorrichtungen sowie Rührapparaturen mit Ankerrührern oder Blattrührern.

Das beim Reagierenlassen erhaltene Reaktionsprodukt lässt sich verwenden zur Beschichtung, Imprägnierung, Tränkung oder ganz allgemein zur Behandlung geschlossener oder poröser Substrate.

Die erfindungsgemäßen Zusammensetzung bzw. die daraus erhaltenen Reaktionsprodukte können zur Behandlung von Textilien oder textilen Geweben verwendet werden.

Die erfindungsgemäßen Zusammensetzung bzw. die daraus erhaltenen Reaktionsprodukte haben den Vorteil, dass die damit behandelten Textilien oder textile Gewebe weniger vergilben als gemäß dem Stand der Technik behandelte Textilien oder textile Gewebe.

Die erfindungsgemäßen Zusammensetzungen enthaltend die Komponenten (1), (2) und ggf. (3) bzw. die daraus erhaltenen erfindungsgemäßen Reaktionsprodukte haben den Vorteil, dass deren Mischungen mit Wasser stabiler sind als die Mischungen der eingesetzten Komponenten (1) und ggf. (3) mit Wasser.

Zur Herstellung der Zusammensetzungen bzw. Reaktionsprodukte können organische Lösungsmittel mitverwendet werden. Beispiele für organische Lösungsmittel sind Diethylenglycolmonobutylether, Propylenglycol, Propylenglycolmonomethylether oder Dipropylenglycolmonomethylether.

Organisches Lösungsmittel kann in Mengen von 1 bis 100 Gew.-teilen, bezogen auf 100 Gew.-teile der erfindungsgemäßen Zusammensetzungen, eingesetzt werden.

Bei der Herstellung der erfindungsgemäßen Zusammensetzungen bzw. Reaktionsprodukte kann Wasser mitverwendet werden. Es werden dann bevorzugt wässrige Lösungen, wässrige Emulsionen, wässrige Dispersionen oder wässrige Microemulsionen erhalten. Wasser kann in Mengen von 0,1 bis 10000 Gew.-teilen, bezogen auf 100 Gew.-teile der erfindungsgemäßen Zusammensetzungen bzw. Reaktionsprodukte, eingesetzt werden.

In den wässrigen Lösungen oder Emulsionen können die Amingruppen in den Zusammensetzungen bzw. Reaktionsprodukten durch Zugabe von Säuren, wie Essigsäuren, protoniert werden.

Das erfindungsgemäße Verfahren kann diskontinuierlich, halbkontinuierlich oder vollkontinuierlich durchgeführt werden.

Beispiel 1:

a) In einem 2-Liter-Dreihalskolben werden unter Stickstoff 440g eines Allylpolyethylenoxids mit einem Allylgehalt von 1,93 mεqu./g, 0,47g Cyclohexenoxyd und 1123g eines α,ω-Dihydrogen-dimethylpolysiloxans mit 0,054% Si-gebundenem Wasserstoff intensiv gerührt. Das trübe Gemisch wird auf 87°C erwärmt, die Hydrosilylierungsreaktion wird durch Zugabe von 1,63 g einer 1%-igen Lösung von Hexachloroplatinsäure in Isopropanol gestartet. Bei exothermer Reaktion wird der Kolbeninhalt in ca. 5 Minuten klar. Nach einer weiteren Stunde bei 100°C enthält der Ansatz weniger als 3 ppm Si-H Gruppen, was einem Umsatz von über 99% entspricht.
Man lässt auf 50°C abkühlen, gibt 5 Tropfen Triethylamin zu und dosiert innerhalb einer halben Stunde insgesamt 71,3g Diketen in den noch warmen Ansatz. Es folgt ein langsamer Anstieg der Innentemperatur auf 74°C. Nach weiteren 2 Stunden bei 70°C ist kein Diketen mehr nachweisbar. Das leicht bräunliche Produktgemisch hat eine Konzentration von
0,518 mεqu.Acetoacetat/g.

b) 200g dieses Siliconpolyetheracetoacetats werden mit 21,9g unverdünntem linearen Polyethylenimin mit einer

Aminkonzentration von 24,7 mεqu./g auf 55°C erwärmt. Bei steigender Viskosität wird das erst trübe Gemisch nach wenigen Minuten homogen klar. Das Reaktionsgemisch lässt man eine halbe Stunde bei 70°C ausreagieren und verdünnt das inzwischen hochviskose Produkt mit 55,5g Diethylenglycolmonobutylether. Man erhält eine klare 80 %-ige Polymerlösung mit einer Viskosität von 4870 $mm^2/s$ (25°C).
Die Polymerlösung hat eine Gesamtbasizität von 1,93 mεqu./g.

80g der Lösung werden mit 7,6g Essigsäure (99,5%-ig) protoniert und in 120g Wasser eingerührt. Unter nur leichter Scherung mit einem Spatel erhält man eine schwach gelbliche feinteilige wässrige Emulsion.
Als Gegenprobe werden 80g einer 80%-igen Lösung (in Diethylenglycolmonobutylether) des in Beispiel 1 unter a) hergestellten Siloxanpolymers mit Acetoacetatgruppen in 120g Wasser eingerührt. Man erhält ein stark trübes Gemisch, das sich in zwei Phasen trennt. Der gleiche Versuch mit vorhergehender Ansäuerung der 80%-igen Lösung führt zum gleichen Ergebnis.
Während das Reaktionsprodukt aus β-Ketocarbonyl-funktionellem Siloxanpolymer und Polyamin gemäß Beispiel 1 b) wasserlöslich ist, ist das eingesetzte β-Ketocarbonyl-funktionellem Siloxanpolymer wasserunlöslich.

Beispiel 2

a) In Analogie zu Beispiel 1 werden aus 1206g des gleichen α,ω-Dihydrogen-dimethylpolysiloxans und 2000g eines Allylpolyethers der Formel $CH_2=CH-CH_2O(C_2H_4O)_{20}(C_3H_6O)_{10,4}H$ mit einem Allylgehalt von 0,65 mεqu./g 3,2kg eines Siliconpolyethers hergestellt. Nach Zugabe von 10 Tropfen Triethylamin dosiert man im Temperaturbereich 60-70°C innerhalb einer Stunde insgesamt 110g Diketen. Man lässt noch 2 Stunden bei gleicher Temperatur ausreagieren, bis im IR-Spektrum kein Diketen mehr nachweisbar ist. Das Produktgemisch hat eine Acetoacetatkonzentration von 0,393mεqu./g und eine Viskosität von 4180$mm^2/s$ bei 25°C.

b) 200g dieses Siliconpolyetheracetoacetats werden mit 314g Wasser verdünnt und homogenisiert. Hierzu werden bei 25°C 9,3g Pentaethylenhexamin mit einer Aminkonzentration von 25,8 mεqu./g dosiert und gut eingerührt, worauf eine leicht exotherme Reaktion einsetzt. Nach Erwärmen auf 40°C nimmt die Viskosität deutlich zu, bis man nach einer weiteren Stunde eine schwach gelbliche Emulsion mit einer Gesamtbasizität von 0,46mεqu./g erhält. Die mit 1,1 Gew.-% Essigsäure teilprotonierte Polyaminosiliconpolyetheremulsion lässt sich beliebig mit vollentsalztem Wasser verdünnen.

Beispiel 3

54g des in Beispiel 2 unter a) hergestellten Siliconpolyetheracetats mit einer Acetacetatkonzentration von 0,393mεqu./g werden in 126g Wasser gelöst und auf 40°C erwärmt. Hierzu dosiert man 20g einer 30%igen wässrigen Lösung von Polyethylenimin einer mittleren Molmasse von ca. 800 Dalton mit einer Aminkonzentration von 23,4 mεqu./g (Lupasol® FG, BASF). Unter schwach exothermer Reaktion und Viskositätsanstieg erhält man eine leicht trübe, bräunliche Polyaminosiliconpolyetherlösung mit einer Gesamtbasizität von ca. 0,70mεqu./g, die mit vollentsalztem Wasser beliebig verdünnbar ist.

Beispiel 4

In einer weiteren Kombination von acetoacetatfunktionellem Siloxanpolymer mit einer Polyaminverbindung werden 54g des in Beispiel 2 unter a) hergestellten Siliconpolyetheracetoacetats mit 216g Wasser verdünnt und auf 40°C erwärmt. In diese Lösung werden 20g einer wässrigen Polyvinylaminlösung mit einer Aminkonzentration von 19 mεqu./g (Lupamin 1595, 30%ig, BASF) verdünnt mit der halben Menge Wasser zügig eingerührt. Bei leichtem Temperaturanstieg nimmt die Viskosität erheblich zu. Man erhält eine stabile Macroemulsion mit einer Gesamtbasizität von ca. 0,38mεqu./g, die mit vollentsalztem Wasser beliebig verdünnbar ist.
Die Messung der Vergilbungsneigung erfolgt am Minolta Chromameter. Hierzu wird Baumwollwirkware am Foulard mit einer Flottenaufnahme von ca. 85% ausgerüstet. Die Flotte wird durch verdünnen der 20%igen Emulsion mit der 25-fachen Menge vollentsalztem Wasser hergestellt. Die Trocknung erfolgt in 3 Minuten bei 150°C und anschließend 2 Minuten bei 180°C Die Ergebnisse sind in der Tabelle zusammengefasst.

Vergleichsversuch 1 gemäß

US 6,121,404:

In Analogie zu Beispiel 1 aus US 6,121,404 wird ein wasserlöslicher linearer Siliconpolyether durch Hydrosilylierung von 1450 g eines Allylethoxylats mit durchschnittlichem Molekulargewicht von $M_n$ = 518 Dalton mit 950 g eines $\alpha,\omega$-Dihydrogen-dimethylpolysiloxans mit einem Aktivwasserstoffgehalt von 0,21% unter Mitwirkung von 0,72 g Cyclohexenoxid hergestellt. Die anschließende Umsetzung mit 230 g Diketen bei 70°C unter Katalyse von 0,3 g Triethylamin liefert ein klares Siliconpolyetheracetoacetat mit einem β-Ketoestergehalt von 1,05 mεqu./g. Eine 10%-ige Lösung dieses Copolymers in Wasser hat demnach einen β-Ketoestergehalt von 0,105 mεqu./g.

100 g dieser 10%-igen Siliconpolyetheracetoacetatlösung werden mit der gleichen Menge einer konventionellen Aminosiliconölemulsion mit einem Gehalt an primären Aminogruppen von 0,105 mεqu./g vermischt. Als Aminosilicon wurde ein Copolymerisat aus Aminoethylaminopropylmethylsiloxy- und Dimethylsiloxyeinheiten verwendet, welches mit Hydroxy- und Methoxygruppen terminiert ist und eine Viskosität von 1560 $mm^2/s$ (25°C) aufweist. Diese Mischung enthält eine Gesamtbasizität von 0,105 mεqu./g und einen Wirkstoffanteil (Siliconpolyetheracetoacetat + Aminöl) von ca. 20%.

Die Messung der Vergilbungsneigung erfolgt, wie in Beispiel 4 beschrieben, am Minolta Chromameter. Hierzu wird Baumwollwirkware am Foulard mit einer Flottenaufnahme von ca. 85% ausgerüstet. Die Flotte wird durch verdünnen der 20%igen Mischung mit der 25-fachen Menge vollentsalztem Wasser hergestellt. Die Trocknung erfolgt in 3 Minuten bei 150°C und anschließend 2 Minuten bei 180°C.

Die Ergebnisse sind in der Tabelle zusammengefasst.

Vergleichsversuch 2:

Die Arbeitsweise von Beispiel 4 wird wiederholt mit der Abänderung, dass anstelle der wässrigen Polyvinylaminlösung 600g der konventionellen Aminosiliconölemulsion aus Vergleichsversuch 1 verwendet werden. Mit weiteren 300g Wasser wird das Gemisch auf 20% Wirkstoffgehalt eingestellt. Es enthält dann eine Gesamtbasizität von 0,108mεqu./g.

Die Messung der Vergilbungsneigung erfolgt, wie in Beispiel 4 beschrieben, am Minolta Chromameter. Hierzu wird Baumwollwirkware am Foulard mit einer Flottenaufnahme von ca. 85% ausgerüstet. Die Flotte wird durch Verdünnen der 20%igen Emulsion mit der 25-fachen Menge vollentsalztem Wasser hergestellt. Die Trocknung erfolgt in 3 Minuten bei 150°C und anschließend 2 Minuten bei 180°C.

Die Ergebnisse sind in der Tabelle zusammengefasst.

Tabelle: Vergilbungswerte in der L a b Skala (Durchschnitt aus 3 Messungen):

| | |
|---|---|
| Beispiel 4 : | b = + 1,35 |
| Vergleichsversuch 1: | b = + 2,75 |
| Vergleichsversuch 2: | b = + 2,82 |
| Blindwert : | b = + 1,27 |

Je größer der Wert b ist, desto stärker ist die Vergilbung. Die Vergleichsversuche 1 und 2 zeigen klar die weit stärkere Vergilbung von Baumwolle, die auf Basis eines konventionellen Aminosiliconöls ausgerüstet wurde, gegenüber einer Baumwollware ausgerüstet mit einer erfindungsgemäßen Mischung nach Beispiel 4. Dies überrascht um so mehr, als die erfindungsgemäße Flotte mehr als 3-mal soviel basischen Stickstoff und diesen ausschließlich als primäres Amin enthält, der nach herkömmlicher Ansicht als Hauptverursacher der Vergilbung von Aminweichmachern auf Baumwolle betrachtet wird.

## Patentansprüche

1. Zusammensetzungen enthaltend wasserlösliche Reaktionsprodukte aus

(1) β-Ketocarbonyl-funktionelle Siloxanpolymere, die mindestens einen dreiwertigen Rest B der allgemeinen Formel

$$-C(=O)-CR^3-C(=O)- \qquad (I)$$

enthalten, wobei
$R^3$ ein Wasserstoffatom oder ein einwertiger Kohlenwasserstoffrest mit 1 bis 30 Kohlenstoffatomen, vorzugsweise ein Wasserstoffatom bedeutet,
(2) organische Si-freie Polyamine, die mindestens drei Aminogruppen enthalten, von denen mindestens zwei primäre Aminogruppen sind,
und gegebenenfalls
(3) Silicium-freie Verbindungen, die mindestens einen Reste B der Formel (I) oder mindestens eine primäre Aminogruppe enthalten.

2. Zusammensetzungen nach Anspruch 1, **dadurch gekennzeichnet, dass** als Rest B in den Siloxanpolymeren (1) SiC-gebundene Reste $B^1$ ausgewählt aus der Gruppe der allgemeinen Formel

$-R^1-C(=O)-CR^3R^4-C(=O)-R^5$ (II)

und

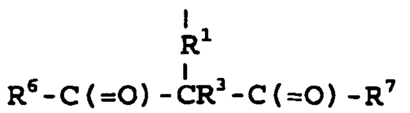
(III)

wobei
$R^1$ ein zweiwertiger organischer Rest mit 1 bis 200 Kohlenstoffatomen, der außer in den Endpositionen Heteroatome ausgewählt aus der Gruppe von Sauerstoff, Schwefel und Stickstoff enthalten kann, vorzugsweise einen Kohlenwasserstoffrest mit 1 bis 20 Kohlenstoffatomen, bedeutet,
$R^3$ die im Anspruch 1 dafür angegebene Bedeutung hat,
$R^4$ ein Wasserstoffatom oder einen Kohlenwasserstoffrest mit 1 bis 30 Kohlenstoffatomen, vorzugsweise ein Wasserstoffatom ist, und
$R^5$, $R^6$ und $R^7$ jeweils ein Kohlenwasserstoffrest mit 1 bis 30 Kohlenstoffatomen bedeutet.

3. Zusammensetzungen nach Anspruch 1, **dadurch gekennzeichnet, dass** als Rest B in den Siloxanpolymeren (1) SiC-gebundene Reste $B^2$ ausgewählt aus der Gruppe der allgemeinen Formel

$-R^8-Y-C(=O)-CHR^3-C(=O)-CH_2R^3$ (IV)

und

$-R^8-Y-C(=O)-CR^3=C(-OH)-CH_2R^3$ (V)

wobei
Y ein Sauerstoffatom oder ein Rest der Formel $-(NR^9-R')_z-NR^2-$, vorzugsweise eine Sauerstoffatom, bedeutet, wobei R' ein zweiwertiger Kohlenwasserstoffrest mit 1 bis 6 Kohlenstoffatomen, vorzugsweise ein Kohlenwasserstoffrest mit 1 bis 4 Kohlenstoffatomen,
$R^2$ ein Wasserstoffatom oder einen Kohlenwasserstoffrest mit 1 bis 18 Kohlenstoffatomen, vorzugsweise ein Wasserstoffatom bedeutet,
$R^3$ die im Anspruch 1 dafür angegebene Bedeutung hat,
$R^8$ ein zweiwertiger organischer Rest mit 1 bis 200 Kohlenstoffatomen, der Heteroatome ausgewählt aus der Gruppe von Sauerstoff, Schwefel und Stickstoff enthalten kann, vorzugsweise ein zweiwertiger Kohlenwasserstoffrest mit 1 bis 120 Kohlenstoffatome, der ein oder mehrere voneinander separate Sauerstoffatome enthalten kann, bedeutet,
$R^9$ $R^2$ oder einen Rest der Formel $-C(=O)-CHR^3-C(=O)-CH_2R^3$ oder $-C(=O)-CR^3=C(-OH)-CH_2R^3$ bedeutet,
z 0 oder eine ganze Zahl von 1 bis 10, vorzugsweise 0, 1 oder 2 ist.

4. Zusammensetzungen nach Anspruch 3, **dadurch gekennzeichnet, dass** in Formel (IV) und (V)
Y ein Sauerstoffatom ist und
$R^8$ ein Polyetherrest der allgemeinen Formel

$-R^{10}-(OC_2H_4)_e-(OC_3H_6)_f-(OC_4H_8)_h-OC_iH_{2i}-$ (Y) (X)

ist, wobei $R^{10}$ einen Alkylenrest mit 2 bis 20 Kohlenstoffatomen bedeutet,
-(Y) die Bindung zu Y in den Formeln (IV) und (V) ist, wobei Y ein Sauerstoffatom ist,
e, f und h jeweils 0 oder eine ganze Zahl von 1 bis 100 bedeuten, mit der Maßgabe, dass die Summe e+f+h≥1 ist, und i 2, 3 oder 4 ist.

5. Zusammensetzungen nach Anspruch 1, **dadurch gekennzeichnet, dass** als Rest B in den Siloxanpolymeren (1) SiC-gebundene Reste $B^3$ ausgewählt aus der Gruppe der allgemeinen Formel

$$-R^{11}-Y-C(=O)-CR^3R^4-C(=O)-Y-R^{12} \qquad (VI)$$

und

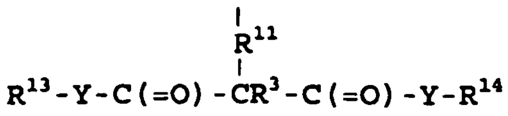

(VII)

wobei $R^3$ und $R^4$ die im Anspruch 1 dafür angegebene Bedeutung haben,
$R^{11}$ ein zweiwertiger organischer Rest, vorzugsweise ein zweiwertiger organischer Rest mit 1 bis 200 Kohlenstoffatomen, der Heteroatome ausgewählt aus der Gruppe von Sauerstoff, Schwefel und Stickstoff enthalten kann, bevorzugt einen Kohlenwasserstoffrest mit 1 bis 20 Kohlenstoffatomen, bedeutet,
$R^{12}$, $R^{13}$ und $R^{14}$ die Bedeutung von $R^5$, $R^6$ und $R^7$ haben und $R^5$,
$R^6$ und $R^7$ die im Anspruch 2 dafür angegebene Bedeutung haben.

6. Zusammensetzungen nach einem der Ansprüche 1 bis 5, **dadurch gekennzeichnet, dass** als Siloxanpolymere (1) Organopolysiloxane ausgewählt aus der Gruppe der allgemeinen Formel

$$X_gR_{3-g}SiO(SiR_2O)_l(SiRXO)_kSiR_{3-g}X_g \qquad (IXa)$$

und

$$(R^{15}O)R_2SiO(SiR_2O)_n(SiRXO)_mSiR_2(OR^{15}) \qquad (IXb)$$

wobei

X einen organischen Rest bedeutet, der den Rest B enthält, vorzugsweise ein SiC-gebundener Rest $B^1$, $B^2$ oder $B^3$ ist, wobei B, $B^1$, $B^2$ und $B^3$ die oben dafür angegebene Bedeutung haben,
R einen einwertigen, gegebenenfalls substituierten Kohlenwasserstoffrest mit 1 bis 18 Kohlenstoffatomen je Rest bedeutet,
g $R^{15}$ ein Wasserstoffatom oder einen Alkylrest mit 1 bis 8 Kohlenstoffatomen, bevorzugt ein Wasserstoffatom oder einen Methyl- oder Ethylrest bedeutet, 0 oder 1,
k 0 oder eine ganze Zahl von 1 bis 30 ist und
1 0 oder eine ganze Zahl von 1 bis 1000 ist,
m eine ganze Zahl von 1 bis 30 ist und
n 0 oder eine ganze Zahl von 1 bis 1000 ist,

mit der Maßgabe, dass durchschnittlich mindestens ein Rest X je Molekül enthalten ist,
eingesetzt werden.

7. Zusammensetzungen nach den Anspruch 6, **dadurch gekennzeichnet, dass** die Reste X SiC-gebundene Reste $B^2$ gemäß den Ansprüchen 3 und 4 sind.

8. Zusammensetzungen nach einem der Ansprüche 1 bis 7, **dadurch gekennzeichnet, dass** die Mischungen der Zusammensetzungen enthaltend die Komponenten (1), (2) und ggf. (3) mit Wasser stabiler sind als die Mischungen

der eingesetzten Komponenten (1) und ggf. (3) mit Wasser.

**9.** Zusammensetzungen nach einem der Ansprüche 1 bis 8, **dadurch gekennzeichnet, dass** als organische Si-freie Polyamine (2) solche eingesetzt werden, die eine Amingruppenkonzentrationen im Bereich von 10 bis 26 mεqu./g (mεqu./g = mÄquivalent pro g Substanz), bevorzugt 13 bis 26 mεqu./g, enthalten.

**10.** Verfahren zur Herstellung der Zusammensetzungen nach einem der Ansprüche 1 bis 9 durch Herstellung einer Mischung enthaltend

(1) β-Ketocarbonyl-funktionellen Siloxanpolymeren, die mindestens einen dreiwertigen Rest B der allgemeinen Formel

$$-C(=O)-\overset{|}{C}R^3-C(=O)- \qquad (I)$$

enthalten, wobei
$R^3$ ein Wasserstoffatom oder ein einwertiger Kohlenwasserstoffrest mit 1 bis 30 Kohlenstoffatomen, vorzugsweise ein Wasserstoffatom bedeutet,
(2) organische Si-freie Polyamine, die mindestens drei Aminogruppen enthalten, von denen mindestens zwei primäre Aminogruppen sind,
und gegebenenfalls
(3) Silicium-freie Verbindungen, die mindestens einen Reste B der Formel (I) oder mindestens eine primäre Aminogruppe enthalten,
mit der Maßgabe, dass nach dem Reagierenlassen der Komponenten (1), (2) und ggf. (3) wasserlösliche Reaktionsprodukte erhalten werden.

## Claims

**1.** Compositions containing water-soluble reaction products from

(1) β-ketocarbonyl-functional siloxane polymers containing at least one trivalent radical B of the general formula

$$-C(=O)-\overset{|}{C}R^3-C(=O)- \qquad (I)$$

where
$R^3$ represents a hydrogen atom or a monovalent hydrocarbyl radical having 1 to 30 carbon atoms, preferably a hydrogen atom,
(2) organic Si-free polyamines containing at least three amino groups of which at least two are primary amino groups,
and optionally
(3) silicon-free compounds containing at least one radical B of formula (I) or at least one primary amino group.

**2.** Compositions according to Claim 1, **characterized in that** radical B in the siloxane polymers (1) comprises SiC-attached radicals $B^1$ selected from the group of the general formula

$$-R^1-C(=O)-CR^3R^4-C(=O)-R^5 \qquad (II)$$

and

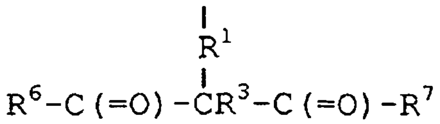 (III)

where
$R^1$ represents a bivalent organic radical which has 1 to 200 carbon atoms and which, except in the terminal positions, may contain heteroatoms selected from the group of oxygen, sulfur and nitrogen, preferably represents a hydrocarbyl radical having 1 to 20 carbon atoms,
$R^3$ is as defined in claim 1,
$R^4$ is a hydrogen atom or a hydrocarbyl radical having 1 to 30 carbon atoms, preferably a hydrogen atom, and
$R^5$, $R^6$ and $R^7$ each represent a hydrocarbyl radical having 1 to 30 carbon atoms.

3. Compositions according to Claim 1, **characterized in that** radical B in the siloxane polymers (1) comprises SiC-attached radicals $B^2$ selected from the group of the general formula

$$-R^8\text{-}Y\text{-}C(=O)\text{-}CHR^3\text{-}C(=O)\text{-}CH^2R^3 \qquad (IV)$$

and

$$-R^8\text{-}Y\text{-}C(=O)\text{-}CR^3{=}C(\text{-}OH)\text{-}CH_2R^3 \qquad (V)$$

where
Y represents an oxygen atom or a radical of the formula $-(NR^9\text{-}R')_z\text{-}NR^2\text{-}$, preferably an oxygen atom, where R' represents a bivalent hydrocarbyl radical having 1 to 6 carbon atoms, preferably a hydrocarbyl radical having 1 to 4 carbon atoms,
$R^2$ represents a hydrogen atom or a hydrocarbyl radical having 1 to 18 carbon atoms, preferably a hydrogen atom,
$R^3$ is as defined in claim 1,
$R^8$ represents a bivalent organic radical which has 1 to 200 carbon atoms and which may contain heteroatoms selected from the group of oxygen, sulfur and nitrogen, preferably represents a bivalent hydrocarbyl radical which has 1 to 120 carbon atoms and may contain one or more mutually separate oxygen atoms,
$R^9$ represents $R^2$ or a radical of the formula $-C(=O)\text{-}CHR^3\text{-}C(=O)\text{-}CH_2R^3$ or $-C(=O)\text{-}CR^3{=}C(\text{-}OH)\text{-}CH_2R^3$,
z is 0 or a whole number from 1 to 10, preferably 0, 1 or 2.

4. Compositions according to Claim 3, **characterized in that** in formula (IV) and (V)
Y is an oxygen atom and
$R^8$ is a polyether radical of the general formula

$$-R^{10}\text{-}(OC_2H_4)_e\text{-}(OC_3H_6)_f\text{-}(OC_4H_8)_h\text{-}OC_iH_{2i}\text{-}\ (Y) \qquad (X)$$

where $R^{10}$ represents an alkylene radical having 2 to 20 carbon atoms,
-(Y) is the bond to Y in the formulae (IV) and (V), where Y is an oxygen atom,
e, f, and h each represent 0 or a whole number from 1 to 100 with the proviso that the sum total $e + f + h$ is $\geq 1$, and
i is 2, 3 or 4.

5. Compositions according to Claim 1, **characterized in that** radical B in the siloxane polymers (1) comprises SiC-attached radicals $B^3$ selected from the group of the general formula

$$-R^{11}\text{-}Y\text{-}C(=O)\text{-}CR^3R^4\text{-}C(=O)\text{-}Y\text{-}R^{12} \qquad (VI)$$

and

$$\begin{array}{c} | \\ R^{11} \\ | \\ R^{13}-Y-C(=O)-CR^{3}-C(=O)-Y-R^{14} \end{array} \qquad (VII)$$

where $R^3$ and $R^9$ are each as defined in claim 1,
$R^{11}$ represents a bivalent organic radical, preferably a bivalent organic radical which has 1 to 200 carbon atoms and which may contain heteroatoms selected from the group of oxygen, sulfur and nitrogen, preferably represents a hydrocarbyl radical having 1 to 20 carbon atoms, $R^{12}$, $R^{13}$ and $R^{14}$ have the meanings of $R^5$, $R^6$ and $R^7$ and $R^5$, $R^6$ and $R^7$ are each as defined in claim 2.

**6.** Compositions according to any one of Claims 1 to 5, **characterized in that** siloxane polymers (1) comprise organopolysiloxanes selected from the group of the general formula

$$X_gR_{3-g}SiO(SiR_2O)_1(SiRXO)_kSiR_{3-g}X_g \qquad (IXa)$$

and

$$(R^{15}O)R_2SiO(SiR_2O)_n(SiRXO)_mSiR_2\,(OR^{15}) \qquad (IXb)$$

where

X represents an organic radical which contains the radical B, preferably is an SiC-attached radical $B^1$, $B^2$ or $B^3$, where B, $B^1$, $B^2$ and $B^3$ are each as defined above,
R represents a monovalent, optionally substituted hydrocarbyl radical having 1 to 18 carbon atoms per radical,
$R^{15}$ represents a hydrogen atom or an alkyl radical having 1 to 8 carbon atoms, preferably a hydrogen atom or a methyl or ethyl radical,
g is 0 or 1,
k is 0 or a whole number from 1 to 30,
1 is 0 or a whole number from 1 to 1000,
m is a whole number from 1 to 30, and
n is 0 or a whole number from 1 to 1000,

with the proviso that on average at least one radical X is present per molecule.

**7.** Compositions according to Claim 6, **characterized in that** the radicals X are SiC-attached radicals $B^2$ as defined in claims 3 and 4.

**8.** Compositions according to any one of Claims 1 to 7, **characterized in that** the mixtures with water of the compositions containing components (1), (2) and optionally (3) are stabler than the mixtures with water of the components (1) and optionally (3) used.

**9.** Compositions according to any one of Claims 1 to 8, **characterized in that** said organic Si-free polyamines (2) comprise organic Si-free polyamines containing an amine group concentration in the range from 10 to 26 meq/g (meq/g = milliequivalent per gram of substance), preferably 13 to 26 meq/g.

**10.** Process for preparing the compositions according to any one of Claims 1 to 9 by preparing a mixture containing

(1) β-ketocarbonyl-functional siloxane polymers containing at least one trivalent radical B of the general formula

$$\begin{array}{c} | \\ -C(=O)-CR^{3}-C(=O)- \end{array} \qquad (I)$$

where
$R^3$ represents a hydrogen atom or a monovalent hydrocarbyl radical having 1 to 30 carbon atoms, preferably a hydrogen atom,
(2) organic Si-free polyamines containing at least three amino groups of which at least two are primary amino groups,
and optionally
(3) silicon-free compounds containing at least one radical B of formula (I) or at least one primary amino group, with the proviso that they provide water-soluble reaction products after the components (1), (2) and optionally (3) have been allowed to react.

## Revendications

**1.** Compositions contenant des produits de réaction hydrosolubles obtenus à partir

(1) de polymères siloxane à fonction β-cétocarbonyle, qui contiennent au moins un radical trivalent B de formule générale

$$\begin{array}{c} \qquad\quad | \\ -C(=O)-CR^3-C(=O)- \end{array} \qquad\qquad (I)$$

dans laquelle
$R^3$ représente un atome d'hydrogène ou un radical hydrocarboné monovalent ayant de 1 à 30 atomes de carbone, de préférence un atome d'hydrogène,
(2) de polyamines organiques exemptes de Si, qui contiennent au moins trois groupes amino, dont au moins deux sont des groupes amino primaires,
et éventuellement
(3) de composés exempts de silicium, qui contiennent au moins un radical B de formule (I) ou au moins un groupe amino primaire.

**2.** Compositions selon la revendication 1, **caractérisées en ce qu'**en tant que radical B dans les polymères siloxane (1) sont contenus des radicaux $B^1$ liés par une liaison SiC, choisis dans l'ensemble de formules générales

$$-R^1-C(=O)-CR^3R^4-C(=O)-R^5 \qquad (II)$$

et

$$\begin{array}{c} | \\ R^1 \\ | \\ R^6-C(=O)-CR^3-C(=O)-R^7 \end{array} \qquad\qquad (III)$$

où
$R^1$ représente un radical organique divalent ayant de 1 à 200 atomes de carbone, qui peut contenir, hormis dans les positions terminales, des hétéroatomes choisis dans l'ensemble constitué par les atomes d'oxygène, de soufre et d'azote, de préférence un radical hydrocarboné ayant de 1 à 20 atomes de carbone,
$R^3$ a la signification indiquée pour ce radical dans la revendication 1,
$R^4$ représente un atome d'hydrogène ou un radical hydrocarboné ayant de 1 à 30 atomes de carbone, de préférence un atome d'hydrogène, et
$R^5$, $R^6$ et $R^7$ représentent chacun un radical hydrocarboné ayant de 1 à 30 atomes de carbone.

**3.** Compositions selon la revendication 1, **caractérisées en ce qu'**en tant que radical B dans les polymères siloxane

(1) sont contenus des radicaux $B^2$ liés par une liaison SiC, choisis dans l'ensemble de formules générales

$$-R^8-Y-C(=O)-CHR^3-C(=O)-CH_2R^3 \qquad (IV)$$

et

$$-R^8-Y-C(=O)-CR^3=C(-OH)-CH_2R^3 \qquad (V)$$

où Y représente un atome d'oxygène ou un radical de formule - $(NR^9-R')_z-NR^2-$, de préférence un atome d'oxygène, R' représentant un radical hydrocarboné divalent ayant de 1 à 6 atomes de carbone, de préférence un radical hydrocarboné ayant de 1 à 4 atomes de carbone,
$R^2$ représentant un atome d'hydrogène ou un radical hydrocarboné ayant de 1 à 18 atomes de carbone, de préférence un atome d'hydrogène,
$R^3$ a la signification indiquée pour ce radical dans la revendication 1,
$R^8$ représente un radical organique divalent ayant de 1 à 200 atomes de carbone, qui peut contenir des hétéroatomes choisis dans l'ensemble constitué par les atomes d'oxygène, de soufre et d'azote, de préférence un radical hydrocarboné divalent ayant de 1 à 120 atomes de carbone, qui peut contenir un ou plusieurs atomes d'oxygène séparés les uns des autres, $R^9$ représente $R^2$ ou un radical de formule $-C(=O)-CHR^3-C(=O)-CH_2R^3$ ou $-C(=O)-CR^3=C(-OH)-CH_2R^3$,
z est 0 ou un nombre entier valant de 1 à 10, de préférence 0, 1 ou 2.

4. Compositions selon la revendication 3, **caractérisées en ce que** dans les formules (IV) et (V) Y est un atome d'oxygène et
$R^8$ est un radical polyéther de formule générale

$$-R^{10}-(OC_2H_4)_e-(OC_3H_6)_f-(OC_4H_8)_h-OC_iH_{2i}-\,(Y) \qquad (X)$$

dans laquelle $R^{10}$ représente un radical alkylène ayant de 2 à 20 atomes de carbone,
-(Y) est la liaison à Y dans les formules (IV) et (V),
Y étant un atome d'oxygène,
e, f et h étant chacun 0 ou un nombre entier valant de 1 à 100, étant entendu que la somme e+f+h est $\geq 1$,
et i étant 2, 3 ou 4.

5. Compositions selon la revendication 1, **caractérisées en ce qu'**en tant que radical B dans les polymères siloxane (1) sont contenus des radicaux $B^3$ liés par une liaison SiC, choisis dans l'ensemble de formules générales

$$-R^{11}-Y-C(=O)-CR^3R^4-C(=O)-Y-R^{12} \qquad (VI)$$

et

$$R^{13}-Y-C(=O)-\overset{\overset{|}{R^{11}}}{\underset{|}{C}}R^3-C(=O)-Y-R^{14} \qquad (VII)$$

où $R^3$ et $R^4$ ont les significations indiquées pour ces radicaux dans la revendication 1,
$R^{11}$ représente un radical organique divalent, de préférence un radical organique divalent ayant de 1 à 200 atomes de carbone, qui peut contenir des hétéroatomes choisis dans l'ensemble constitué par les atomes d'oxygène, de soufre et d'azote, de préférence un radical hydrocarboné ayant de 1 à 20 atomes de carbone,
$R^{12}$, $R^{13}$ et $R^{14}$ ont les significations de $R^5$, $R^6$ et $R^7$ et $R^5$, $R^6$ et $R^7$ ont les significations indiquées pour ces radicaux dans la revendication 2.

6. Compositions selon l'une quelconque des revendications 1 à 5, **caractérisées en ce qu'**on utilise comme polymères siloxane (1) des organopolysiloxanes choisis dans l'ensemble de formules générales

$$X_gR_{3-g}SiO(SiR_2O)_l(SiRXO)_kSiR_{3-g}X_g \qquad (IXa)$$

et

$$(R^{15}O)R_2SiO(SiR_2O)_n(SiRXO)_mSiR_2(OR^{15}) \qquad (IXb)$$

où

X représente un radical organique qui contient le radical B, de préférence un radical $B^1$, $B^2$ ou $B^3$ lié par une liaison SiC, B, $B^1$, $B^2$ et $B^3$ ayant les significations indiquées plus haut pour ces radicaux,
R représente un radical hydrocarboné monovalent, éventuellement substitué, ayant de 1 à 18 atomes de carbone par radical,
$R^{15}$ représente un atome d'hydrogène ou un radical alkyle ayant de 1 à 8 atomes de carbone, de préférence un atome d'hydrogène ou un radical méthyle ou éthyle,
g est 0 ou 1,
k est 0 ou un nombre entier valant de 1 à 30 et
1 est 0 ou un nombre entier valant de 1 à 1 000,
m est un nombre entier valant de 1 à 30 et
n est 0 ou un nombre entier valant de 1 à 1 000,

étant entendu qu'en moyenne au moins un radical X est contenu par molécule.

**7.** Compositions selon la revendication 6, **caractérisées en ce que** les radicaux X sont des radicaux $B^2$ liés par une liaison SiC selon les revendications 3 et 4.

**8.** Compositions selon l'une quelconque des revendications 1 à 7, **caractérisées en ce que** les mélanges des compositions contenant les composants (1), (2) et éventuellement (3) avec l'eau sont plus stables que les mélanges des composants (1) et éventuellement (3) utilisés avec l'eau.

**9.** Compositions selon l'une quelconque des revendications 1 à 8, **caractérisées en ce qu'**on utilise comme polyamines organiques (2) exemptes de silicium celles qui contiennent des concentrations de groupes amines dans la plage de 10 à 26 mEq/g (mEq/g = équivalent massique par g de substance), de préférence de 13 à 26 mEq/g.

**10.** Procédé pour la préparation des compositions selon l'une quelconque des revendications 1 à 9, par préparation d'un mélange contenant

(1) des polymères siloxane à fonction β-cétocarbonyle, qui contiennent au moins un radical trivalent B de formule générale

$$\begin{array}{c} \qquad\quad | \\ -C(=O)-CR^3-C(=O)- \end{array} \qquad (I)$$

dans laquelle
$R^3$ représente un atome d'hydrogène ou un radical hydrocarboné monovalent ayant de 1 à 30 atomes de carbone, de préférence un atome d'hydrogène,
(2) des polyamines organiques exemptes de Si, qui contiennent au moins trois groupes amino, dont au moins deux sont des groupes amino primaires,
et éventuellement
(3) des composés exempts de silicium, qui contiennent au moins un radical B de formule (I) ou au moins un groupe amino primaire,
étant entendu qu'après avoir fait réagir les composants (1), (2) et éventuellement (3), on obtient des produits de réaction hydrosolubles.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6121404 A
- EP 603716 A1
- EP 481345 A2
- EP 199087 A1
- US 3668183 A
- EP 442653 A2
- US 5952443 A
- DE 1193504 A
- DE 1795563 A


### In der Beschreibung aufgeführte Nicht-Patentliteratur


- *J. prakt. Chem.,* 1994, vol. 336, 483-491